# EUROPÄISCHE PATENTSCHRIFT

(11) **EP 3 637 136 B1**
(45) Veröffentlichungstag und Bekanntmachung des Hinweises auf die Patenterteilung: **20.03.2024**
(21) Anmeldenummer: 19193687.1
(22) Anmeldetag: 27.08.2019
(51) Int. Cl.: G01S 7/497, G01S 17/42, G01S 7/486

(54) **SICHERHEITSLASERSCANNER UND VERFAHREN ZUM ERHALT DER FUNKTIONSFÄHIGKEIT**
SECURITY LASER SCANNER AND METHOD FOR MAINTAINING FUNCTIONALITY
BALAYEUR LASER DE SÉCURITÉ ET PROCÉDÉ DE MAINTIEN DE LA CAPACITÉ DE FONCTIONNEMENT

(30) Priorität: 09.10.2018 DE 102018124837
(43) Veröffentlichungstag der Anmeldung: 15.04.2020
(73) Patentinhaber: SICK AG, 79183 Waldkirch (DE)
(72) Erfinder: Jachmann, Dr. Fabian, 79102 Freiburg (DE)

(56) Entgegenhaltungen:
- EP-A1- 3 163 322
- DE-A1- 19 652 440
- US-A1- 2013 187 032

## Beschreibung

Die Erfindung betrifft einen Sicherheitslaserscanner zur Erfassung von Objekten in einem Überwachungsbereich und ein Verfahren zum Erhalt von dessen Funktionsfähigkeit nach dem Oberbegriff von Anspruch 1 beziehungsweise 12.

In einem Laserscanner überstreicht ein von einem Laser erzeugter Lichtstrahl mit Hilfe einer Ablenkeinheit periodisch einen Überwachungsbereich. Das Licht wird an Objekten in dem Überwachungsbereich remittiert und in dem Laserscanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen. Für herkömmliche Laserscanner sind zwei grundsätzliche Prinzipien bekannt, die Lichtlaufzeit zu bestimmen. Bei phasenbasierten Verfahren wird das kontinuierliche Sendelicht moduliert und die Phasenverschiebung des empfangenen gegenüber dem gesendeten Licht ausgewertet. Bei pulsbasierten Verfahren oder Pulslaufzeitverfahren arbeitet der Sender in einem Einzelpulsbetrieb mit verhältnismäßig hohen Pulsenergien, und der Laserscanner misst Objektabstände anhand der Laufzeit zwischen dem Aussenden und Empfangen eines Einzellichtpulses. In einem beispielsweise aus der EP 2 469 296 B1 bekannten Pulsmittelungsverfahren werden für eine Messung eine Vielzahl von Einzelpulsen ausgesandt und die Empfangspulse statistisch ausgewertet.

Mit den Winkel- und Entfernungsangaben ist der Ort eines Objektes in dem Überwachungsbereich in zweidimensionalen Polarkoordinaten erfasst. Damit lassen sich die Positionen von Objekten ermitteln oder deren Kontur bestimmen. Die dritte Raumkoordinate kann durch eine Relativbewegung in Querrichtung ebenfalls erfasst werden, beispielsweise durch einen weiteren Bewegungsfreiheitsgrad der Ablenkeinheit in dem Laserscanner oder indem das Objekt relativ zu dem Laserscanner befördert wird. So können auch dreidimensionale Konturen ausgemessen werden.

Sicherheitslaserscanner werden nicht für allgemeine Messaufgaben, sondern in der Sicherheitstechnik beziehungsweise dem Personenschutz zur Überwachung einer Gefahrenquelle eingesetzt, wie sie beispielsweise eine gefährliche Maschine darstellt. Ein derartiger Sicherheitslaserscanner ist aus der DE 43 40 756 A1 bekannt. Dabei wird ein Schutzfeld überwacht, das während des Betriebs der Maschine vom Bedienpersonal nicht betreten werden darf. Erkennt der Sicherheitslaserscanner einen unzulässigen Schutzfeldeingriff, etwa ein Bein einer Bedienperson, so löst er einen Nothalt der Maschine aus. Andere Eingriffe in das Schutzfeld, beispielsweise durch statische Maschinenteile, können vorab als zulässig eingelernt werden. Oft sind den Schutzfeldern Warnfelder vorgelagert, wo Eingriffe zunächst nur zu einer Warnung führen, um den Schutzfeldeingriff und damit die Absicherung noch rechtzeitig zu verhindern und so die Verfügbarkeit der Anlage zu erhöhen. Sicherheitslaserscanner arbeiten in der Regel pulsbasiert.

Sicherheitslaserscanner müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder speziell Überwachung der Verschmutzung optischer Bauteile, insbesondere einer Frontscheibe. Die Anforderungen an die Selbstdiagnose sind je nach Gefährdungspotential unterschiedlich hoch, was beispielsweise durch sogenannte Performancelevel ausgedrückt wird.

Eine der Maßnahmen zur Erfüllung der einschlägigen Normen ist die Verwendung eines internen Referenzzielsystems, mit dessen Hilfe die fehlerfreie Abstandsmessung und deren unbeeinträchtigte Empfindlichkeit überprüft werden. Das Referenzziel wird in jedem Umlauf der Ablenkeinheit optisch angetastet und das Signalecho im Hinblick auf Signalstärke und Abstandswert ausgewertet. Fällt dieser Selbsttest negativ aus, schaltet das Gerät sicherheitsgerichtet ab. Es ist üblich, einen zusammenhängenden Winkelbereich exklusiv für die Referenzzielmessung zu verwenden. In diesem Winkelbereich befindet sich auch der Träger, an dem die Ablenkeinheit mit Motor, Drehspiegel und Winkelencoder aufgehängt ist.

Ein Selbsttest kann prinzipiell Fehlern erster und zweiter Art unterliegen. Ein Fehler erster Art wäre, dass das System nicht mehr funktioniert, der Selbsttest dies aber nicht aufdeckt. Das ist bei einem Sicherheitssystem unbedingt zu vermeiden. Eine typische Forderung ist die Einfehlersicherheit, d.h. das System erkennt einen derartigen Fehler nur in dem extrem unwahrscheinlichen Fall nicht, dass zufällig gleichzeitig zwei Fehler auftreten, die nicht auf eine gemeinsame Ursache zurückgehen. Ein Fehler zweiter Art bedeutet, dass eine sicherheitsgerichtete Abschaltung erfolgt, obwohl das System objektiv noch voll funktionsfähig ist. Das ist niemals ein Sicherheitsproblem und dadurch wesentlich unkritischer, verringert aber die Verfügbarkeit und führt zu unerwünschten und kostenträchtigen Stillständen sowie zu an sich unnötigen Reparaturen oder Gerätetausch.

Nun würde die Messung an dem internen Referenzziel prinzipiell auch die Möglichkeit eröffnen, zugunsten der Verfügbarkeit bei einem gescheiterten Selbsttest nicht sicherheitsgerichtet abzuschalten, sondern die Empfindlichkeit des Systems anzupassen, so dass die Referenzmessung wieder in den zulässigen Bereich zurückkommt. Das geschieht aber herkömmlich wegen Sicherheitsbedenken nicht. Der Pegel des Referenzsignals von dem Referenzziel ist nicht allein von der Gesamtempfindlichkeit des Geräts abhängig, sondern kann von dem speziellen optischen Strahlengang der Referenzzielmessung beeinflusst werden, der über Temperatur schwankt oder sich durch Alterung verändern kann. Das wird auch als Degradation des Referenzziels bezeichnet.

Diese Degradation des Referenzziels schließt in herkömmlicher Betrachtung eine Anpassung der Empfindlichkeit wegen der Forderung nach Einfehlersicherheit aus. Würde nämlich eine Degradation des Referenzziels einen zu hohen Pegel des Referenzsignals erzeugen und dementsprechend die Empfindlichkeit des Geräts abgesenkt, so werden möglicherweise dunkle Ziele in Maximalreichweite nicht mehr erkannt. Umgekehrt könnte bei zu geringem Pegel des Referenzsignals die Empfindlichkeit zu stark erhöht werden, und solch ein Gerät wäre nicht mehr ausreichend robust gegenüber Fremdlichteinflüssen. Trotz nur eines Fehlers, nämlich der Degradation des Referenzziels, könnte das System somit unentdeckt seine Funktionsfähigkeit verlieren. Dagegen sind solche sicherheitsrelevanten Szenarien ausgeschlossen, wenn die Empfindlichkeit nicht an die Referenzzielmessung angepasst wird. Dann führt eine Degradation des Referenzziels nur zu einem Verfügbarkeits- nicht aber einem Sicherheitsproblem, und unter diesem Dogma arbeiten alle herkömmlichen Sicherheitslaserscanner.

Es ist auch für Sicherheitslaserscanner nach dem Stand der Technik bekannt, die Empfindlichkeit nachzustellen, aber gerade nicht in Abhängigkeit von der Referenzzielmessung. Vielmehr sind Nachschlagtabellen hinterlegt, aus denen für jede Betriebstemperatur die passende Betriebsspannung für die Avalanchephotodiode des Lichtempfängers ausgesucht wird. Damit ist aber natürlich auch nur der Parameter Temperatur berücksichtigt, und dies auf eine sehr starre und aufwändige Weise.

Die EP 3 163 322 B1 offenbart einen Sicherheitslaserscanner mit einem speziellen internen Referenzziel, das zugleich starke und schwache Remission testet. Einleitend wird auch erwähnt, dass die Referenzzielmessung die Überwachung und Nachregelung mehrerer Leistungsmerkmale und Messergebnisse erlaubt. Das bezieht sich aber gerade nicht auf die Empfindlichkeit, sondern auf einen Abstandsoffset. Die EP 3 163 322 B1 gibt keinerlei Hinweis auf die Degradation des Referenzziels, so dass sich in deren Rahmen eine Anpassung der Empfindlichkeit in Abhängigkeit von der Referenzzielmessung aus den diskutierten Gründen verbietet.

Aus der EP 3 091 271 A1 ist ein Lichttaster mit einem Lichtempfänger bekannt, der mindestens eine Einzelphotonenlawinendiode aufweist. Dabei wird in einer Ausführungsform der Pegel mit zwei Referenzzielen überwacht. Die doppelte Ausführung der Referenzziele ist eine alternative Möglichkeit, die Einfehlersicherheit zu gewährleisten und eine Degradation zu erkennen. Das Verfahren der EP 3 091 271 A1 unterscheidet sich grundsätzlich vom Vorgehen in einem Sicherheitslaserscanner. Speziell die Verwendung zweier Referenzziele würde in einem Laserscanner erheblichen Aufwand bedeuten, und sie würden auch Bauraum beanspruchen und so den Totbereich gegenüber einer 360°-Messung noch weiter vergrößern.

Die WO 2015/077614 A1 nutzt einen Referenzpfad, um die Vorspannung einer Lawinenphotodiode und damit deren Empfindlichkeit anzupassen. Das hat nichts mit einem sicherheitsrelevanten Selbsttest zu tun. Außerdem wird ein Strahlteiler verwendet, um Mess- und Referenzpfad zu trennen, was sich schon im Grundaufbau deutlich von einem Sicherheitslaserscanner unterscheidet.

Aus der US2013/0187032 A1 ist ein Sicherheitslaserscanner mit einem zweigeteilten hellen und dunklen Referenzziel bekannt. Die Detektionsempfindlichkeit wird wird an deren Referenzsignale angepasst. Allerdings ist die Degradation des Referenzziels überhaupt nicht angesprochen, und damit ist ganz unklar, wie eine Einfehlersicherheit gewährleistet sein soll.

Es gibt auch außerhalb der Sicherheitstechnik interne Referenzziele. Sie dienen häufig dazu, die Lichtlaufzeitmessung um Driften von internen Signalwegen zu korrigieren. Ein Beispiel dafür ist die EP 1 876 468 B1. Dort wird ab einem gemeinsamen Startsignal sowohl eine Referenzlaufzeit auf einem internen Referenzpfad als auch die eigentliche Lichtlaufzeit auf dem externen Messpfad gemessen, und die Referenzlaufzeit wird verwendet, um Driften aus der Lichtlaufzeit herauszurechnen. Das trägt zwar den gemeinsamen Namen Referenzmessung und kann sogar einen ähnlichen optischen Aufbau haben, hat aber funktional mit dem sicherheitsrelevanten Selbsttest nichts zu tun.

Bekannt ist auch, die optische Ausgangsleistung eines Lichtsenders mit einer Monitordiode zu überwachen und gegebenenfalls anzupassen. Das wird so aber nicht in Sicherheitslaserscannern realisiert, in denen kein Teil des Sendelichts in eine Monitordiode ausgekoppelt werden soll. Ansonsten wäre es nur eine abgewandelte Form der internen Referenzzielmessung, welche an der oben geschilderten Problematik der Einfehlersicherheit nichts ändert, da auch die Monitordiode und der optische Pfad dahin degradieren könnte.

Es ist deshalb Aufgabe der Erfindung, einen Sicherheitslaserscanner mit erweiterter Nutzung der Referenzzielmessung anzugeben.

Diese Aufgabe wird durch einen Sicherheitslaserscanner zur Erfassung von Objekten in einem Überwachungsbereich und ein Verfahren zum Erhalt von dessen Funktionsfähigkeit nach Anspruch 1 beziehungsweise 12 gelöst. Ein Sicherheitslaserscanner ist ein sicherer Laserscanner im Sinne einer Sicherheitsnorm wie einleitend beschrieben und darf deshalb zum Personenschutz an Gefahrenquellen eingesetzt werden. Der Sicherheitslaserscanner weist eine drehbare Ablenkeinheit auf, also beispielsweise einen rotierenden Optikkopf mit Lichtsender und Empfänger oder einen rotierenden Drehspiegel, und tastet auf diese Weise periodisch eine Scan- oder Überwachungsebene ab. In bestimmten Referenzwinkelstellungen der Ablenkeinheit gelangt der ausgesandte Lichtstrahl nicht in den Überwachungsbereich, sondern wird intern an einem Referenzziel zurückgeworfen, um ein Referenzsignal zu erzeugen. Das Referenzsignal wird daher mit dem ausgesandten Lichtstrahl selbst erzeugt, nicht etwa lediglich mit einem ausgekoppelten Teilstrahl. Mit dem Referenzsignal wird der Sicherheitslaserscanner auf Funktionsfähigkeit geprüft.

Die Erfindung geht von dem Grundgedanken aus, das Referenzsignal doch für eine Anpassung der Empfindlichkeit der Erfassung zu nutzen, obwohl die Degradation und damit ein Fehler des Referenzziels nicht ausgeschlossen werden kann. Das ist ein Bruch mit dem herkömmlichen Vorgehen, das ganz bewusst das Referenzsignal ausschließlich zum Überwachen beziehungsweise für den Selbsttest genutzt hat. Die Erfindung hat also erkannt, dass die herrschende Überzeugung, durch solche Anpassungen die Sicherheit zu verlieren, nicht korrekt war. Deshalb wird erfindungsgemäß das Referenzsignal nicht nur geprüft, sondern dessen Auswertung auch einer Anpassung zugrunde gelegt. Dazu wird insbesondere ein Maß für den Pegel des Referenzsignals bestimmt, sei es als momentaner Wert oder ein über ein gewisses Zeitintervall gewonnener Wert, wie ein Extremum, ein Integral oder ein Durchschnitt, und eine Änderung des Pegels durch gegenläufige Anpassung der Empfindlichkeit zumindest teilweise kompensiert.

Die Veränderung der Empfindlichkeit ist nur auf eine positive Anpassung, vorzugsweise in begrenztem Rahmen, eingeschränkt, denn in diesem Fall lässt sich besonders überzeugend zeigen, dass die Sicherheit nicht beeinträchtigt ist.

Die Erfindung hat den Vorteil, dass Sicherheitslaserscanner, die erfindungsgemäß mit einer Anpassung der Gesamtempfindlichkeit beziehungsweise der Empfindlichkeit der Erfassung ausgestattet sind, sich sehr viel robuster gegenüber systematischen Schwankungen auf dem Selbsttest beziehungsweise der Überwachung der Detektionsempfindlichkeit mit Hilfe des Referenzsignals zeigen. (Fehl-)auslösungen dieses Selbsttests sind einer der Hauptgründe für Feldrückläufer bei Sicherheitslaserscannern. Es ist daher ein erheblicher Vorteil, wenn Alterungseffekte und Degradation des Referenzziels zumindest in begrenztem Umfang ausgeglichen werden können. Es kommt dann über die große Lebensdauer eines solchen Geräts von typischerweise zehn bis zwanzig Jahre zu einer deutlichen Verbesserung der Stabilität im Feld und entsprechend weniger Ausfällen aufgrund fehlerhafter Selbstdiagnose oder auch tatsächlicher Alterung im Sende-Empfangssystem. Entgegen der Erwartung bleibt die Toleranz des Systems gegenüber Einzelfehlern erhalten.

Die Steuer- und Auswertungseinheit ist bevorzugt dafür ausgebildet, die Empfindlichkeit mit Hilfe des Referenzsignals auf eine Sollempfindlichkeit zu regeln. Die Anpassung der Empfindlichkeit ist demnach als Regelschleife beziehungsweise Nachregelung für den Arbeitspunkt des Sicherheitslaserscanners umgesetzt, die abhängig von dem Referenzsignal und insbesondere dessen Pegel die Gesamtempfindlichkeit des Geräts nachsteuert. Dabei kann eine Sollempfindlichkeit als fester Wert vorgegeben sein, auf die eingeregelt werden soll, oder ein Sollkorridor, bei dem die Regelung erst eingreift, wenn der Korridor verlassen wird.

Die Steuer- und Auswertungseinheit ist dafür ausgebildet, die Empfindlichkeit in Zyklen zu regeln, die mindestens zehnmal so lang sind wie Zyklen, in denen die Funktionsfähigkeit anhand des Referenzsignals geprüft wird. Die Regelung der Empfindlichkeit ist also träge, wobei die Zeitschritte auch noch wesentlich länger im Bereich von Minuten oder sogar Stunden und Tagen sein können, denn die auszugleichenden Drift- und Degradationseffekte sind sehr langsam. Auch bei herkömmlichen Geräten ohne die erfindungsgemäße Anpassung der Empfindlichkeit treten Ausfälle erst nach Jahren oder gar Jahrzehnten auf. Eine träge Regelung ist nicht nur weniger aufwändig, sie verhindert auch ein Aufschaukeln oder unnötige Schwankung der Messbedingungen.

Die Steuer- und Auswertungseinheit ist bevorzugt dafür ausgebildet, die Empfindlichkeit der Erfassung über die Sendeleistung des Lichtsenders zu verändern. Die optische Ausgangsleistung des Lichtsenders ist einer der Parameter, der die Empfindlichkeit der Erfassung des Sicherheitslaserscanners bestimmt. Daher ist eine Anpassung über die Sende- oder Laserleistung möglich. Das ist aber nur in den Grenzen möglich, in denen der Augenschutz beziehungsweise die Laserschutzklasse noch eingehalten wird.

Die Steuer- und Auswertungseinheit ist bevorzugt dafür ausgebildet, die Empfindlichkeit der Erfassung über eine Verstärkung des Lichtempfängers und/oder eines dem Lichtempfänger nachgeschalteten Verstärkers zu verändern. Alternativ oder zusätzlich kann über eine sendeseitige Anpassung der Intensität des Sendelichts beziehungsweise eine Änderung des Arbeitspunktes der Sendediode die Gesamtempfindlichkeit des Sensors verändert werden. Dabei besteht die Möglichkeit, die Empfindlichkeit des Lichtempfängers selbst zu verändern, etwa über die an eine APD (Avalanche Photodiode) oder SPAD (Single-Photon Avalanche Diode) angelegte Spannung. Außerdem kann ein Verstärkungsfaktor eines Verstärkers verändert werden, welcher dem Lichtempfänger nachgeschaltet ist.

Die Steuer- und Auswertungseinheit ist bevorzugt dafür ausgebildet, die Empfindlichkeit der Erfassung über einer Absenkung einer Detektionsschwelle zu verändern, mit der das Empfangssignal zur Erfassung von Objekten bewertet wird. Dabei kann es sich um eine echte Schwellenoperation handeln, etwa eine oder mehrere Schwellen, die einen Empfangspuls lokalisieren, aber auch um Schwellenkriterien, mit denen beispielsweise ein digitalisiertes Empfangssignal ausgewertet wird.

Die Steuer- und Auswertungseinheit ist dafür ausgebildet, die Empfindlichkeit der Erfassung gegenüber einem Ausgangswert nur zu vergrößern. Die Empfindlichkeit wird also nur in eine Richtung nachgeführt, wenn das Referenzsignal zu schwach wird. Damit ist die eine Hälfte der möglichen Sicherheitsprobleme ausgeschlossen, nämlich ein zu unempfindliches System mit Detektionslücken für ferne und/oder schwach remittierende Objekte, da in diese Richtung nicht verändert wird. Es erfolgt damit wie herkömmlich eine sicherheitsgerichtete Abschaltung, wenn das Referenzsignal aufgrund einer Degradation zu stark wird. Frühere Anpassungen hin zu einem empfindlicheren System können wieder zurückgenommen werden, aber die Empfind-lichkeit wird nicht so weit abgesenkt, dass sie unter den Ausgangswert fällt.

Die Steuer- und Auswertungseinheit ist bevorzugt dafür ausgebildet, die Empfindlichkeit der Erfassung gegenüber einem Ausgangswert bei Inbetriebnahme um höchstens 30 % zu verändern. Im Zusammenhang mit der im Vorabsatz erläuterten Nachführung nur in eine Richtung bedeutet das eine begrenzte, positive Anpassung. Die Grenze wird gesetzt, weil die Empfindlichkeit nicht zu groß werden darf, damit nicht die Robustheit gegenüber Fremdlicht verloren geht. Die Grenze bei 30 % folgt aus einer allgemeinen System- und Sicherheitsbetrachtung, sie garantiert weiterhin die Sicherheit und lässt trotzdem einigen Spielraum für Anpassungen. Engere Grenzen beispielsweise bei 10 %, 20 % oder auch großzügigere Grenzen bei 40 % oder 50 % sind vorstellbar, aber das geht entweder auf Kosten des Spielraums oder bedarf einer detaillierten Betrachtung, ob die Sicherheit wirklich noch gewährleistet ist.

Der Sicherheitslaserscanner ist bevorzugt als Entfernungsmesser ausgebildet, indem die Steuer- und Auswertungseinheit die Lichtlaufzeit zwischen Aussenden und Empfang des Lichtstrahls und daraus die Entfernung eines Objekts bestimmt. Damit können wesentlich genauere Objektinformationen gewonnen werden als durch bloße Feststellung der Anwesenheit von Objekten. Vorzugsweise ist eine Winkelmesseinheit zur Erfassung der Winkelstellung der Ablenkeinheit vorgesehen. Insgesamt stehen dann für erfasste Objekte vollständige zweidimensionale Positionskoordinaten zur Verfügung. Im Falle eines räumlich ausgedehnten Überwachungsbereichs wird auch der jeweilige Kippwinkel der Abtasteinheit erfasst, so dass insgesamt dreidimensionale Kugelkoordinaten erhalten werden, welche die Objektposition innerhalb des Überwachungsbereichs ebenfalls vollständig beschreiben.

Die Steuer- und Auswertungseinheit ist bevorzugt dafür ausgebildet, beim Prüfen der Funktionsfähigkeit den Abstand zu dem internen Referenzziel zu messen. Damit wird auch die Entfernungsmessung geprüft, die bei korrekt arbeitendem Sicherheitslaserscanner für das Referenzziel die erwartete Entfernung ergibt. Dazu wird insbesondere das Referenzsignal ebenso ausgewertet wie ein Empfangssignal. Für den Messkern ist es kein Unterschied, ob der ausgesandte Lichtstrahl außen an einem Messobjekt oder intern an dem Referenzzielt zurückgeworfen wird. Es ist nur beispielsweise wegen des aktuellen Stellwinkels der Ablenkeinheit entsprechend dem Totwinkelbereich mit dem Referenzziel bekannt, dass es sich um eine Referenzmessung handelt.

Der Sicherheitslaserscanner weist bevorzugt einen Sicherheitsausgang auf, wobei die Steuer- und Auswertungseinheit dafür ausgebildet ist zu bestimmen, ob sich ein Objekt in einem Schutzfeld innerhalb des Überwachungsbereichs befindet, und daraufhin ein sicherheitsgerichtetes Abschaltsignal über den Sicherheitsausgang auszugeben. Damit ist die Sicherheitsauswertung bereits in den Sicherheitslaserscanner integriert, der direkt ein sicherheitsgerichtetes Abschaltsignal für eine Maschine oder eine zwischengeschaltete Sicherheitssteuerung bereitstellt.

Die Steuer- und Auswertungseinheit ist bevorzugt dafür ausgebildet, ein sicherheitsgerichtetes Abschaltsignal über den Sicherheitsausgang auszugeben, wenn das Prüfen der Funktionsfähigkeit keine fehlerfreie Funktion ergibt. Damit erfolgt die Sicherheitsabschaltung ebenso wie im Falle eines Objekteingriffs in ein Schutzfeld auch dann, wenn der Selbsttest über die Referenzzielmessung ein Problem aufdeckt. Das kann ein in falscher Entfernung gemessenes Referenzziel sein oder ein falscher, insbesondere zu kleiner Pegel des Referenzsignals, der durch Veränderungen der Empfindlichkeit nicht mehr ausgeglichen werden kann, etwa weil das System die erforderliche Empfindlichkeit gar nicht mehr erreichen kann oder dafür aus dem zulässigen Bereich von beispielsweise 30 % herausgehen müsste.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die einzige Abbildung der Zeichnung zeigt in:

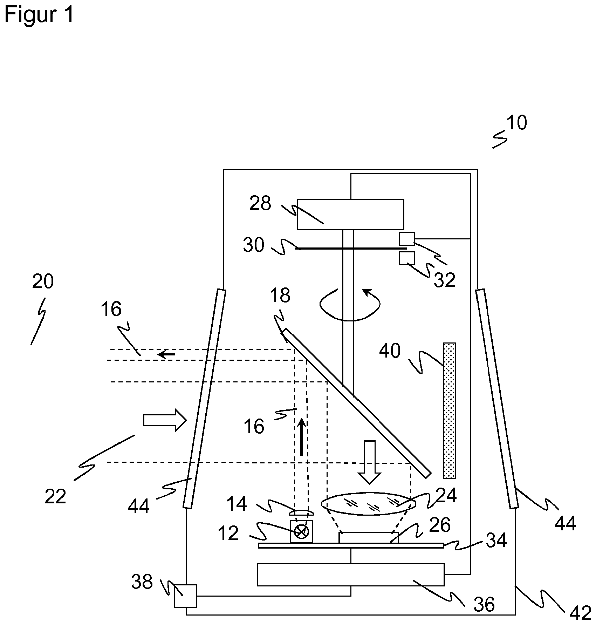

- Fig. 1: eine schematische Schnittdarstellung eines Sicherheitslaserscanners.

Figur 1 zeigt eine schematische Schnittdarstellung durch einen Sicherheitslaserscanner 10. Sicherheitslaserscanner 10 bedeutet, dass ein Einsatz im Personenschutz möglich ist, also Maßnahmen entsprechend der einleitend genannten Normen getroffen sind, die einen unentdeckten Ausfall der Funktion entsprechend dem Sicherheitsniveau oder Performancelevel ausschließen.

Ein Lichtsender 12, beispielsweise mit einer Laserlichtquelle, erzeugt mit Hilfe einer Sendeoptik 14 einen Sendelichtstrahl 16, der an einer Ablenkeinheit 18 in einen Überwachungsbereich 20 umgelenkt wird. Fällt der Sendelichtstrahl 16 in dem Überwachungsbereich 20 auf ein Objekt, so gelangt remittiertes Licht 22 wieder zu dem Sicherheitslaserscanner 10 zurück und wird dort über die Ablenkeinheit 18 und mittels einer Empfangsoptik 24 von einem Lichtempfänger 26 detektiert, beispielsweise einer Photodiode oder einer APD (Avalanche Photo Diode).

Die Ablenkeinheit 18 ist in dieser Ausführungsform als Drehspiegel ausgestaltet, die durch Antrieb eines Motors 28 kontinuierlich rotiert. Die jeweilige Winkelstellung des Motors 28 beziehungsweise der Ablenkeinheit 18 wird über einen Encoder erkannt, der beispielsweise eine Codescheibe 30 und eine Gabellichtschranke 32 umfasst. Der von dem Lichtsender 12 erzeugte Sendelichtstrahl 16 überstreicht somit den durch die Rotationsbewegung erzeugten Überwachungsbereich 20. Anstelle eines Drehspiegels ist auch möglich, die Ablenkeinheit 18 als rotierenden Optikkopf auszubilden, in dem Lichtsender 12 und/oder Lichtempfänger 26 und möglicherweise weitere Elemente untergebracht sind. Auch die Gestaltung von Sendeoptik 14 und Empfangsoptik 24 kann variiert werden, etwa über einen strahlformenden Spiegel als Ablenkeinheit, eine andere Anordnung der Linsen oder zusätzliche Linsen. Insbesondere sind Sicherheitslaserscanner auch in einer koaxialen Anordnung bekannt, also mit gemeinsamer optischer Achse von Lichtsender 12 und Lichtempfänger 26. In der dargestellten Ausführungsform sind Lichtsender 12 und Lichtempfänger 26 zusammen auf einer Leiterkarte 34 untergebracht. Auch das ist nur ein Beispiel, denn es können eigene Leiterkarten sowie andere Anordnungen beispielsweise mit einem gegenseitigen Höhenversatz vorgesehen sein.

Wird nun von dem Lichtempfänger 26 remittiertes Licht 22 aus dem Überwachungsbereich 20 empfangen, so kann aus der von dem Encoder 30, 32 gemessenen Winkelstellung der Ablenkeinheit 18 auf die Winkellage des Objektes in dem Überwachungsbereich 20 geschlossen werden. Zusätzlich wird vorzugsweise die Lichtlaufzeit von Aussenden eines Lichtsignals bis zu dessen Empfang nach Reflexion an dem Objekt in dem Überwachungsbereich 20 ermittelt und unter Verwendung der Lichtgeschwindigkeit auf die Entfernung des Objektes von dem Sicherheitslaserscanner 10 geschlossen.

Diese Auswertung erfolgt in einer Auswerteeinheit 36, die dafür mit dem Lichtsender 12, dem Lichtempfänger 26, dem Motor 28 und dem Encoder 32 verbunden ist. Somit stehen über den Winkel und die Entfernung zweidimensionale Polarkoordinaten aller Objekte in dem Überwachungsbereich 20 zur Verfügung. In sicherheitstechnischer Anwendung prüft die Auswertungseinheit 36, ob ein unzulässiges Objekt in einen innerhalb des Überwachungsbereichs 20 festgelegten Schutzbereich eingreift. Ist das der Fall, wird über einen Sicherheitsausgang 38 (OSSD, Output Signal Switching Device) ein Absicherungssignal an eine überwachte Gefahrenquelle, beispielsweise eine Maschine ausgegeben. Es kann zusätzliche nicht dargestellte Schnittstellen zur Ausgabe von rohen oder vorverarbeiteten Messdaten oder beispielsweise zum Parametrieren des Sicherheitslaserscanners 10 geben.

Für einen Selbsttest der Funktionsfähigkeit des Sicherheitslaserscanners 10 ist ein Referenzziel 40 in einem Winkelbereich des Sicherheitslaserscanners 10 angeordnet, der in der Figur 1 gerade um 180° versetzt zu Sendelichtstrahl 16 und remittiertem Licht 22 dargestellt ist. Wenn die Ablenkeinheit 18 im Verlauf ihrer Drehbewegung entsprechende Winkelstellungen einnimmt, verlässt der Sendelichtstrahl 16 den Sicherheitslaserscanner 10 nicht, sondern wird innerhalb des Sicherheitslaserscanners 10 von dem Referenzziel 40 zurückgeworfen. Der Lichtempfänger 26 erzeugt in diesem Fall kein Empfangssignal zum Erfassen von Objekten in dem Überwachungsbereich 20, sondern ein Referenzsignal, das für eine Funktionsüberprüfung und Empfindlichkeitsanpassung genutzt wird. In dem Winkelbereich, den das Referenzziel 40 einnimmt, liegt ein Totbereich der Messung, so dass der Sicherheitslaserscanner 10 keinen vollen Winkelbereich von 360° erfassen kann. In diesem Totbereich können auch wie dargestellt Leitungen geführt oder bei alternativen Anordnungen des Motors dessen Aufhängung untergebracht sein. Alle genannten Funktionskomponenten sind in einem Gehäuse 42 angeordnet, das im Bereich des Lichtaus- und Lichteintritts eine Frontscheibe 44 aufweist.

Wie schon einleitend erläutert, wird das Referenzsignal ausgewertet, um die Funktionsfähigkeit des Sicherheitslaserscanners 10 zu prüfen. Dieser Test findet vorzugsweise in kurzen Zyklen einmal je Umlauf der Ablenkeinheit 18 statt. Wenn die Steuer- und Auswertungseinheit das Referenzziel 40 nicht in der erwarteten Entfernung misst, so ist das ein Fehler, und der Sicherheitslaserscanner 10 geht in den Absicherungszustand mit Ausgabe eines sicherheitsgerichteten Abschaltsignals an dem Sicherheitsausgang 38. Weicht der Pegel des Referenzsignals von einem Sollwert ab, so führt das aber abweichend vom herkömmlichen Vorgehen nicht unmittelbar zu einem sicherheitsgerichteten Abschaltsignal.

Vielmehr wird zumindest in einem gewissen Rahmen die Empfindlichkeit des Sicherheitslaserscanners 10 angepasst, um die Abweichung des Referenzsignals zu kompensieren. Eine Umsetzungsmöglichkeit ist eine Regelschleife, die durch Anpassung der Empfindlichkeit dafür sorgt, dass das Referenzsignal auf einem Sollwert oder in einem Sollkorridor bleibt. Für die Anpassung der Empfindlichkeit stehen verschiedene Möglichkeiten zur Verfügung, die einzeln oder kombiniert genutzt werden können. So ist denkbar, die optische Ausgangsleistung des Lichtsenders 12 zu erhöhen. Dabei sollte beachtet werden, dass eine höhere Laserleistung nicht zu einer Abweichung von der qualifizierten Laserschutzklasse führt. Eine weitere Möglichkeit bietet die Verstärkung im Empfangspfad, und zwar sowohl diejenige des Lichtempfängers 26 selbst, etwa eine Vorspannung einer APD, also auch ein Verstärkungsfaktor eines nachgeordneten Verstärkers. Schließlich besteht auch die Möglichkeit, mit unterschiedlichen Empfindlichkeiten auszuwerten, insbesondere Detektionsschwellen zu verändern.

Entgegen der einleitend diskutierten Überzeugung, dass die Einhaltung der Einfehlersicherheit nicht gewahrt wäre, wenn die Empfindlichkeit aufgrund des Referenzsignals angepasst wird, zeigt die Erfindung nach einer sicherheitsgerichteten Betrachtung der Einflüsse einer Regelung der Gesamtempfindlichkeit, dass eine Erhöhung der Empfindlichkeit in begrenztem Umfang im Betrieb eines Sicherheitslaserscanners 10 doch möglich ist. Eine höhere Empfindlichkeit, etwa durch Anhebung der Verstärkung des Lichtempfängers 26, führt nicht dazu, dass das Gerät zu empfindlich gegenüber Störeinflüssen wie Fremdlicht wird.

Die Empfindlichkeit sollte aber nicht so weit gesteigert werden, dass es zu merklich mehr Fehlabschaltungen aufgrund der unerwünschten Detektion von unkritischen Objekten wie Aerosolen und dergleichen kommt. Bei einer Nachregelung von bis zu plus 30 % insbesondere durch Anpassung der Empfängerverstärkung wird sehr gut einige Degradation des Referenzziels 40 ausgeglichen, ohne in der Praxis die Gesamtperformance des Sicherheitslaserscanners 10 signifikant zu beeinflussen, d.h. die Detektionsfähigkeit oder Staubempfindlichkeit. Dabei wird als Grund der Änderung des Referenzsignals eine Degradation des Referenzziels 40 unterstellt. Ebenso werden auch tatsächliche Degradation oder Driften in dem eigentlichen Sende-Empfangssystem und damit der Messung von Objekten in dem Überwachungsbereich 20 in dem genannten begrenzten Umfang ausgeregelt.

Eine Regelung der Empfindlichkeit auf Basis des Referenzsignals sollte ferner so träge ausgeführt sein, dass es zu keinem Aufschwingen kommt. Das ist auch unproblematisch, weil der Pegel des Referenzsignals üblicherweise nur sehr langsam driftet.

Die Regelung wurde bisher nur in Richtung zu größeren Empfindlichkeiten beschrieben. Eine Regelung oder Anpassung in Gegenrichtung zu geringeren Empfindlichkeiten ist mit größerer Vorsicht zu behandeln, da es auf keinen Fall dazu kommen darf, dass ein dunkles Objekt in großem Abstand übersehen wird.

Die Erfindung wurde für einen Sicherheitslaserscanner 10 beschrieben. Generell ist sie aber auch auf jede sicherheitsgerichtete Sensorik übertragbar, die mittels eines Referenzziels 40 beziehungsweise des mit dessen Hilfe gewonnenen Referenzsignals ihre Empfindlichkeit periodisch überprüft.

## Patentansprüche

1. Sicherheitslaserscanner (10) zur Erfassung von Objekten in einem Überwachungsbereich (20), mit einem Lichtsender (12) zum Aussenden eines Lichtstrahls (16) in den Überwachungsbereich (20), einem Lichtempfänger (26) zum Erzeugen eines Empfangssignals aus dem von den Objekten remittierten Lichtstrahl (22), einer drehbaren Ablenkeinheit (18) zur periodischen Ablenkung des Lichtstrahls (16, 22), um im Verlauf der Bewegung den Überwachungsbereich (20) abzutasten, einem internen Referenzziel (40), das den ausgesandten Lichtstrahl (16) innerhalb des Sicherheitslaserscanners (10) zu dem Lichtempfänger (26) zurückwirft, um ein Referenzsignal zu erzeugen, und mit einer Steuer- und Auswertungseinheit (36), die dafür ausgebildet ist, Objekte anhand des Empfangssignals zu erfassen, die Funktionsfähigkeit des Sicherheitslaserscanners (10) anhand des Referenzsignals zu prüfen und die Empfindlichkeit der Erfassung in Abhängigkeit von dem Referenzsignal zu verändern,
**dadurch gekennzeichnet,**
**dass** die Steuer- und Auswertungseinheit (36) dafür ausgebildet ist, die Empfindlichkeit der Erfassung nur zu vergrößern, d.h. bei der Veränderung der Empfindlichkeit nur in eine Richtung nachzuführen, wenn das Referenzsignal zu schwach wird, wobei frühere Anpassungen hin zu einem empfindlicheren System zurückgenommen werden können und wobei eine sicherheitsgerichtete Abschaltung erfolgt, wenn das Referenzsignal zu stark wird.

2. Sicherheitslaserscanner (10) nach Anspruch 1,
wobei die Steuer- und Auswertungseinheit (36) dafür ausgebildet ist, die Empfindlichkeit mit Hilfe des Referenzsignals auf eine Sollempfindlichkeit zu regeln.

3. Sicherheitslaserscanner (10) nach Anspruch 2,
wobei die Steuer- und Auswertungseinheit (36) dafür ausgebildet ist, die Empfindlichkeit in Zyklen zu regeln, die mindestens zehnmal so lang sind wie Zyklen, in denen die Funktionsfähigkeit anhand des Referenzsignals geprüft wird.

4. Sicherheitslaserscanner (10) nach einem der vorhergehenden Ansprüche, wobei die Steuer- und Auswertungseinheit (36) dafür ausgebildet ist, die Empfindlichkeit der Erfassung über die Sendeleistung des Lichtsenders (12) zu verändern.

5. Sicherheitslaserscanner (10) nach einem der vorhergehenden Ansprüche, wobei die Steuer- und Auswertungseinheit (36) dafür ausgebildet ist, die Empfindlichkeit der Erfassung über eine Verstärkung des Lichtempfängers (26) und/oder eines dem Lichtempfänger (26) nachgeschalteten Verstärkers zu verändern.

6. Sicherheitslaserscanner (10) nach einem der vorhergehenden Ansprüche, wobei die Steuer- und Auswertungseinheit (36) dafür ausgebildet ist, die Empfindlichkeit der Erfassung über einer Absenkung einer Detektionsschwelle zu verändern, mit der das Empfangssignal zur Erfassung von Objekten bewertet wird.

7. Sicherheitslaserscanner (10) nach einem der vorhergehenden Ansprüche, wobei die Steuer- und Auswertungseinheit (36) dafür ausgebildet ist, die Empfindlichkeit der Erfassung gegenüber einem Ausgangswert bei Inbetriebnahme um höchstens 30 % zu verändern.

8. Sicherheitslaserscanner (10) nach einem der vorhergehenden Ansprüche, der als Entfernungsmesser ausgebildet ist, indem die Steuer- und Auswertungseinheit (36) die Lichtlaufzeit zwischen Aussenden und Empfang des Lichtstrahls (16, 22) und daraus die Entfernung eines Objekts bestimmt und/oder wobei eine Winkelmesseinheit (30, 32) zur Erfassung der Winkelstellung der Ablenkeinheit (18) vorgesehen ist.

9. Sicherheitslaserscanner (10) nach Anspruch 8,
wobei die Steuer- und Auswertungseinheit (36) dafür ausgebildet ist, beim Prüfen der Funktionsfähigkeit den Abstand zu dem internen Referenzziel (40) zu messen.

10. Sicherheitslaserscanner (10) nach einem der vorhergehenden Ansprüche, der einen Sicherheitsausgang (38) aufweist, wobei die Steuer- und Auswertungseinheit (36) dafür ausgebildet ist zu bestimmen, ob sich ein Objekt in einem Schutzfeld innerhalb des Überwachungsbereichs (20) befindet, und daraufhin ein sicherheitsgerichtetes Abschaltsignal über den Sicherheitsausgang (38) auszugeben.

11. Sicherheitslaserscanner (10) nach Anspruch 10,
wobei die Steuer- und Auswertungseinheit (36) dafür ausgebildet ist, ein sicherheitsgerichtetes Abschaltsignal über den Sicherheitsausgang (38) auszugeben, wenn das Prüfen der Funktionsfähigkeit keine fehlerfreie Funktion ergibt.

12. Verfahren zum Erhalt der Funktionsfähigkeit eines Sicherheitslaserscanners (10), der Objekte in einem Überwachungsbereich (20) erfasst, indem ein ausgesandter Lichtstrahl (16) durch eine sich drehende (18) Ablenkeinheit periodisch abgelenkt, aus dem von Objekten in dem Überwachungsbereich (20) remittierten Lichtstrahl (22) ein Empfangssignal erzeugt und das Empfangssignal zum Erfassen von Objekten ausgewertet wird, wobei zum Überprüfen der Funktionsfähigkeit ein Referenzsignal ausgewertet wird, das an einem internen Referenzziel (40) erzeugt wird, das so angeordnet ist, dass es den ausgesandten Lichtstrahl (16) innerhalb des Sicherheitslaserscanners (10) zurückwirft, wobei die Empfindlichkeit der Erfassung in Abhängigkeit von dem Referenzsignal verändert wird,
**dadurch gekennzeichnet,**
**dass** die Empfindlichkeit der Erfassung nur vergrößert wird, d.h. die Empfindlichkeit nur in eine Richtung nachgeführt wird, wenn das Referenzsignal zu schwach wird, wobei frühere Anpassungen hin zu einem empfindlicheren System zurückgenommen werden können und wobei eine sicherheitsgerichtete Abschaltung erfolgt, wenn das Referenzsignal zu stark wird.

## Claims

1. A safety laser scanner (10) for detecting objects in a monitoring area (20), the safety laser scanner (10) comprising a light transmitter (12) for transmitting a light beam (16) into the monitoring area (20), a light receiver (26) for generating a received signal from the remitted light beam (22) remitted by the objects, a rotatable deflection unit (18) for periodically deflecting the light beam (16, 22) in order to scan the monitoring area (20) in the course of the movement, an internal reference target (40) which reflects the transmitted light beam (16) back to the light receiver (26) within the safety laser scanner (10), in order to generate a reference signal, and a control and evaluation unit (36) configured to detect objects on the basis of the received signal, to check the operability of the safety laser scanner (10) on the basis of the reference signal and to change the sensitivity of the detection as a function of the reference signal,
**characterized in that** the control and evaluation unit (36) is configured to only increase the sensitivity of the detection, i.e. when the sensitivity is changed, to only adjust in one direction for the reference signal becoming too weak, wherein earlier adjustments towards a more sensitive system can be reversed and wherein a safety-related switch-off takes place if the reference signal becomes too strong.

2. The safety laser scanner (10) according to claim 1,
wherein the control and evaluation unit (36) is configured to control the sensitivity to a set sensitivity with the aid of the reference signal.

3. The safety laser scanner (10) according to claim 2,
wherein the control and evaluation unit (36) is configured to control the sensitivity in cycles which are at least ten times as long as cycles in which the operability is tested using the reference signal.

4. The safety laser scanner (10) according to any of the preceding claims,
wherein the control and evaluation unit (36) is configured to change the sensitivity of the detection via the transmission power of the light transmitter (12).

5. The safety laser scanner (10) according to any of the preceding claims, wherein the control and evaluation unit (36) is configured to change the sensitivity of the detection via an amplification of the light receiver (26) and/or of an amplifier connected downstream of the light receiver (26).

6. The safety laser scanner (10) according to any of the preceding claims, wherein the control and evaluation unit (36) is configured to change the sensitivity of the detection by lowering a detection threshold with which the received signal for detecting objects is evaluated.

7. The safety laser scanner (10) according to any of the preceding claims, wherein the control and evaluation unit (36) is configured to change the sensitivity of the detection relative to an initial value by at most 30% during commissioning.

8. The safety laser scanner (10) according to any of the preceding claims, which is configured as a rangefinder in that the control and evaluation unit (36) determines the light time of flight between transmission and reception of the light beam (16, 22) and from this the distance of an object and/or wherein an angle measuring unit (30, 32) is provided for detecting the angular position of the deflection unit (18).

9. The safety laser scanner (10) according to claim 8,
wherein the control and evaluation unit (36) is configured to measure the distance to the internal reference target (40) when testing the functionality.

10. The safety laser scanner (10) according to any of the preceding claims, which has a safety output (38), the control and evaluation unit (36) being configured to determine whether an object is located in a protective field within the monitoring area (20), and thereupon to output a safety-related switch-off signal via the safety output (38).

11. The safety laser scanner (10) according to claim 10,
wherein the control and evaluation unit (36) is configured to output a safety-related switch-off signal via the safety output (38) if the functional capability test does not result in fault-free operation.

12. A method for maintaining the operability of a safety laser scanner (10) that detects objects in a monitoring area (20) by periodically deflecting an transmitted light beam (16) by a rotating deflection unit (18), generating a received signal from the remitted light beam (22) remitted by objects in the monitoring area (20) and evaluating the received signal for detecting objects, wherein a reference signal is evaluated for checking the operability, which reference signal is generated at an internal reference target (40) that is arranged such that it reflects the transmitted light beam (16) within the safety laser scanner (10), wherein the sensitivity of the detection is changed as a function of the reference signal, **characterized in that** the sensitivity of the detection is only increased, i.e. the sensitivity is only adjusted in one direction for the reference signal becoming too weak, wherein earlier adjustments towards a more sensitive system can be reversed and wherein a safety-related switch-off takes place if the reference signal becomes too strong.

## Revendications

1. Scanner laser de sécurité (10) pour la détection des objets dans une zone de surveillance (20), avec un émetteur de lumière (12) pour l'émission d'un faisceau lumineux (16) dans la zone de surveillance (20), un récepteur de lumière (26) pour générer un signal de réception à partir du faisceau lumineux émis (22) par les objets, une unité de déviation rotative (18) pour dévier périodiquement le faisceau lumineux (16, 22) afin de balayer la zone de surveillance (20) au cours du mouvement, une cible de référence interne (40) qui renvoie le faisceau lumineux émis (16) à l'intérieur du scanner laser de sécurité (10) vers le récepteur de lumière (26), afin de générer un signal de référence, et avec une unité de commande et d'évaluation (36) configurée pour détecter des objets à l'aide du signal de réception, pour vérifier la capacité du fonctionnement du scanner laser de sécurité (10) à l'aide du signal de référence et pour modifier la sensibilité de la détection en fonction du signal de référence,
**caractérisé en ce que** l'unité de commande et d'évaluation (36) est configurée pour n'augmenter la sensibilité de la détection, c'est-à-dire pour ne suivre la modification de la sensibilité que dans une direction, lorsque le signal de référence devient trop faible, dans laquelle les ajustements antérieurs vers un système plus sensible peuvent être retirés et dans laquelle une coupure de sûreté aura lieu si le signal de référence devient trop fort.

2. Scanner laser de sécurité (10) selon la revendication 1,
dans lequel l'unité de commande et d'évaluation (36) est configurée pour régler la sensibilité à une sensibilité nominale à l'aide du signal de référence.

3. Scanner laser de sécurité (10) selon la revendication 2,
dans lequel l'unité de commande et d'évaluation (36) est configurée pour régler la sensibilité dans des cycles qui sont au moins dix fois plus longs que les cycles dans lesquels la capacité du fonctionnement est vérifiée à l'aide du signal de référence.

4. Scanner laser de sécurité (10) selon l'une des revendications précédentes, dans lequel l'unité de commande et d'évaluation (36) est configurée pour modifier la sensibilité de la détection via la puissance d'émission de l'émetteur de lumière (12).

5. Scanner laser de sécurité (10) selon l'une des revendications précédentes, dans lequel l'unité de commande et d'évaluation (36) est configurée pour modifier la sensibilité de la détection via une amplification du récepteur de lumière (26) et/ou d'un amplificateur connecté en aval du récepteur de lumière (26).

6. Scanner laser de sécurité (10) selon l'une des revendications précédentes, dans lequel l'unité de commande et d'évaluation (36) est configurée pour modifier la sensibilité de la détection via un abaissement d'un seuil de détection avec lequel le signal de réception pour la détection d'objets est évalué.

7. Scanner laser de sécurité (10) selon l'une des revendications précédentes, dans lequel l'unité de commande et d'évaluation (36) est configurée pour modifier la sensibilité de la détection par rapport à une valeur initiale d'au plus 30 % lors de la mise en service.

8. Scanner laser de sécurité (10) selon l'une des revendications précédentes, qui est configuré comme un télémètre dans lequel l'unité de commande et d'évaluation (36) détermine le temps de vol de la lumière entre l'émission et la réception du faisceau lumineux (16, 22) et, à partir de là, la distance d'un objet et/ou dans lequel une unité de mesure d'angle (30, 32) est prévue pour détecter la position angulaire de l'unité de déviation (18).

9. Scanner laser de sécurité (10) selon la revendication 8,
dans lequel l'unité de commande et d'évaluation (36) est configurée pour mesurer la distance par rapport à la cible de référence interne (40) lors de la vérification de la capacité du fonctionnement.

10. Scanner laser de sécurité (10) selon l'une des revendications précédentes,
qui comporte une sortie de sécurité (38), dans lequel l'unité de commande et d'évaluation (36) est configurée pour déterminer si un objet se trouve dans un champ de protection à l'intérieur de la zone de surveillance (20), et pour émettre ensuite un signal de coupure de sûreté via la sortie de sécurité (38).

11. Scanner laser de sécurité (10) selon la revendication 10,
dans lequel l'unité de commande et d'évaluation (36) est configurée pour émettre un signal de coupure de sûreté via la sortie de sécurité (38) si la vérification de la capacité du fonctionnement ne donne pas à un fonctionnement correct.

12. Procédé pour maintenir la capacité du fonctionnement d'un scanner laser de sécurité (10) qui détecte des objets dans une zone de surveillance (20) en déviant périodiquement un faisceau lumineux émis (16) par une unité de déviation rotative (18), en générant un signal de réception à partir du faisceau lumineux réé-mis (22) par des objets dans la zone de surveillance (20) et en évaluant le signal de réception pour la détection d'objets, dans lequel un signal de référence est évalué pour vérifier la capacité du fonctionnement, lequel signal de référence est généré sur une cible de référence interne (40) qui est disposée de manière à renvoyer le faisceau lumineux émis (16) à l'intérieur du scanner laser de sécurité (10), dans lequel la sensibilité de la détection est modifiée en fonction du signal de référence,
**caractérisé en ce que**
la sensibilité de la détection n'est augmentée, c'est-à-dire que la sensibilité n'est suivi que dans une direction lorsque le signal de référence devient trop faible, dans laquelle les ajustements antérieurs vers un système plus sensible peuvent être retirés et dans laquelle une coupure de sûreté aura lieu si le signal de référence devient trop fort.
